Europäisches Patentamt

European Patent Office

Office européen des brevets

(11) Veröffentlichungsnummer: **0 025 013**
**A1**

(12) # EUROPÄISCHE PATENTANMELDUNG

(21) Anmeldenummer: **80810230.5**

(51) Int. Cl.³: **G 02 B 7/26**

(22) Anmeldetag: **17.07.80**

(30) Priorität: **15.08.79 CH 7467/79**

(43) Veröffentlichungstag der Anmeldung:
**11.03.81 Patentblatt 81/10**

(84) Benannte Vertragsstaaten:
**AT BE CH DE FR GB IT LI LU NL SE**

(71) Anmelder: **DIAMOND S.A.**
**Via dei Patrizi**
**CH-6616 Losone-Locarno(CH)**

(72) Erfinder: **Marazzi, Silvio**

**CH-Cavigliano(CH)**

(74) Vertreter: **Hepp, Dieter**
**NPM AG Buebenloostrasse 22**
**CH-9500 Wil(CH)**

(54) **Koppelanordnung für Lichtwellenleiter und Verfahren zu deren Herstellung.**

(57) Die Koppelanordnung für Lichtwellenleiter weist ein Kapillarröhrchen (4) auf, welches den Lichtwellenleiter umgibt und welches mit diesem zusammen von einem Halteröhrchen (5) aufgenommen wird. Das Halteröhrchen ist seinerseits in einer Zentrierhülse (7) befestigt. Die Zentrierhülse besteht aus einem Material mit einer Mohs'schen Härte die gleich oder grösser ist als 8,5.

Fig. 7

EP 0 025 013 A1

DIAMOND SA, Losone, Schweiz

Koppelanordnung für Lichtwellenleiter und
Verfahren zu deren Herstellung

Die Erfindung betrifft eine Koppelanordnung für Lichtwellenleiter und ein Verfahren zu deren Herstellung, bei dem ein Lichtwellenleiter-Endabschnitt in der Bohrung eines Halteröhrchens fixiert und das Röhrchen in einer Zentrierhülse angeordnet ist.

Derartige Koppelanordnungen sind in verschiedenen Ausführungsformen bekannt und gebräuchlich. Dabei geht es darum, dass das Ende eines Lichtwellenleiters derart im Verhältnis zur Zentrierhülse einer Kupplung fixiert wird, dass beim Verbinden zwei in derartigen Zentrierhülsen gehaltenen Lichtwellenleitern die Lichtleiterkerne mittig und axial fluchtend einander gegenüberliegen. Jede Fehlausrichtung der Lichtwellenleiter- Endabschnitte führt dabei zu Uebergangsverlusten in der Koppelanordnung.

Die Schwierigkeiten bei der Justierung der Lichtwellenleiter-Endabschnitte in der Koppelanordnung sind insbesondere aus den deutschen Offenlegungsschriften 26 26 243, 27 04 140 oder der DAS 23 52 874 ersichtlich.

Bei bekannten Koppelanordnungen wird in der Regel der freigelegte Lichtwellenleiter-Endabschnitt in einem Halteröhrchen befestigt, welches seinerseits in der Relativlage zu einer Zentrierhülse fixiert wird. Die Genauigkeitsanforderung bei der Herstellung derartiger Verbindungen liegen im Bereich von wenigen tausendstel Millimetern, was vor allem die Herstellung der Halteröhrchen, insbesondere die Herstellung von Bohrungen für Lichtwellenleiter-Endabschnitte mit kleinstem Durchmesser erschwert. Ausserdem treten Probleme bei der Herstellung der Zentrierhülsen auf, da bereits geringste Deformationen oder Verspannungen - z.B. beim Zusammenbau - zu einer Fehlausrichtung von einigen tausendstel Millimetern führen kann.

Aufgabe der Erfindung ist es, die Nachteile des Bekannten zu vermeiden, insbesondere also eine Koppelanordnung für Lichtwellenleiter sowie ein Verfahren zu deren Herstellung zu schaffen, die bei einfachstem Aufbau und einfacher Montage höchste Genauigkeit gewährleistet.

Erfindungsgemäss wird dies in erster Linie dadurch gewährleistet, dass zwischen dem Halteröhrchen und dem Lichtwellenleiter-Endabschnitt wenigstens ein Kapillarröhrchen vorgesehen ist. Die Herstellung eines derartigen Kapillarröhrchens, insbesondere aus gezogenem Glas, ist relativ einfach und ermöglicht eine DurchmesserVergrösserung der Aufnahmebohrung im Halteröhrchen. Dies wiederum erlaubt eine einfache Herstellung des Halteröhrchens mit hoher Genauigkeit und ermöglicht es zudem, relativ lange Halteröhrchen herzustellen, die zuverlässige axiale Einspannung des Lichtwellenleiter-Endabschnitts gewährleisten und die derart über das Ende der Zentrierhülse hinausstehend ausgebildet werden, dass das Halteröhrchen durch geeignete Justiereinrichtungen von hinten ergriffen, fixiert und abgeglichen werden kann. Das Kapillarrörchen kann dabei einstückig oder mehrstückig ausgebildet sein. Wesentlich ist, dass es mit einer engen Toleranzpaarung mit Schiebesitz auf den Lichtwellenleiter-Endabschnitt geschoben und dort z.B. mittels Klebstoff fixiert werden kann. Vorteilhaft ist es dabei auch, wenn das Kapillarrörchen seinerseits im Halteröhrchen mit einer engen Toleranzpaarung mit Schiebesitz angeordnet ist, sodass die Verbindung des Lichtwellenleiter-Endabschnitts mit Kapillarrörchen und Halteröhrchen ohne aufwendige Justierung durch Aufeinanderschieben und Verkleben erfolgen kann.

Wenn das Kapillarröhrchen ein Glasröhrchen ist, ergibt sich ausserdem vorteilhaft, dass beim Schleifen des Lichtwellenleiter-Endabschnitts an der Stirnseite keine Gefahr der Verunreinigung der Stirnfläche durch Metallspäne gegeben ist.

Besonders vorteilhaft ist es, wenn die Zentrierhülse zur Aufnahme der Anordnung aus Lichtwellenleiter-Endabschnitt, Kapillarröhrchen und Halteröhrchen aus einem isotropen Sintermaterial und/oder einem polykristallinen und/oder einem monokristallinen Material mit einer Mohs'schen Härte von wenigstens 8,5 besteht. Durch die Vergrösserung des Aussendurchmessers des Halteröhrchens, die durch die Kombination mit dem Kapillarröhrchen ermöglicht wird, wird ersichtlicherweise auch der Innendurchmesser der Zentrierhülse vergrössert, was den Einsatz von harten Sintermaterialien oder kristallinen Materialien, welche mit höchster Genauigkeit geschliffen werden und die nicht durch Zug- oder Druckbeanspruchungen deformiert werden und eine Fehlausrichtung der Lichtwellenleiter-Endabschnitte hervorrufen.

Besonders vorteilhaft lässt sich die Koppelanordnung mit einer Zentrierhülse aus Hartmetall herstellen. Die Zentrierhülse kann jedoch auch aus Keramik-Werkstoffen, Bornitrit, polykristallinem Diamant, Saphir, Rubin oder Naturdiamant hergestellt werden. Auch ist die Kombination derartiger Werkstoffe, z.B. in einem mehrlagigen Aufbau möglich und für bestimmte Einsatzgebiete vorteilhaft.

Die Fixierung und Befestigung des Lichtwellenleiter-Endabschnitts im Kapillarröhrchen, des Kapillarröhrchens im Halteröhrchen, bzw. des Halteröhrchens in der Zentrierhülse wird zweckmässigerweise mit aushärtendem Klebstoff, z.B. Zweikomponenten-Klebstoff, durchgeführt.

Besonders stabile Anordnung lässt sich erreichen, wenn das Halteröhrchen länger ist als das Kapillarröhrchen und den Schutzmantel, der den Lichtwellenleiter umgibt, aufnimmt.

Die Verbindung von Halteröhrchen und Zentrierhülse wird dabei vorteilhaft erst durchgeführt, wenn der Klebstoff von der Rückseite her in den Ringraum zwischen Halteröhrchen und Zentrierhülse eingeführt wird, sodass die Verschmutzung der Stirnfläche des Lichtwellenleiter-Endabschnitts vermieden wird.

Ersichtlicherweise werden der erfinderische Fortschritt und der technische Inhalt des Anmeldungsgegenstands nicht nur durch die verwendeten Einzelmerkmale, sondern insbesondere auch durch Kombination und Unterkombination der Anwendung findenden Merkmale gewährleistet. Die Erfindung ist im folgenden in einem Ausführungsbeispiel anhand der Zeichnungen näher erläutert. Es zeigen:

Fig. 1 bis 6   Den Aufbau einer Koppelanordnung mit den Merkmalen der Erfindung, und

Fig. 7   zwei Koppelanordnungen im zusammengebauten Zustand.

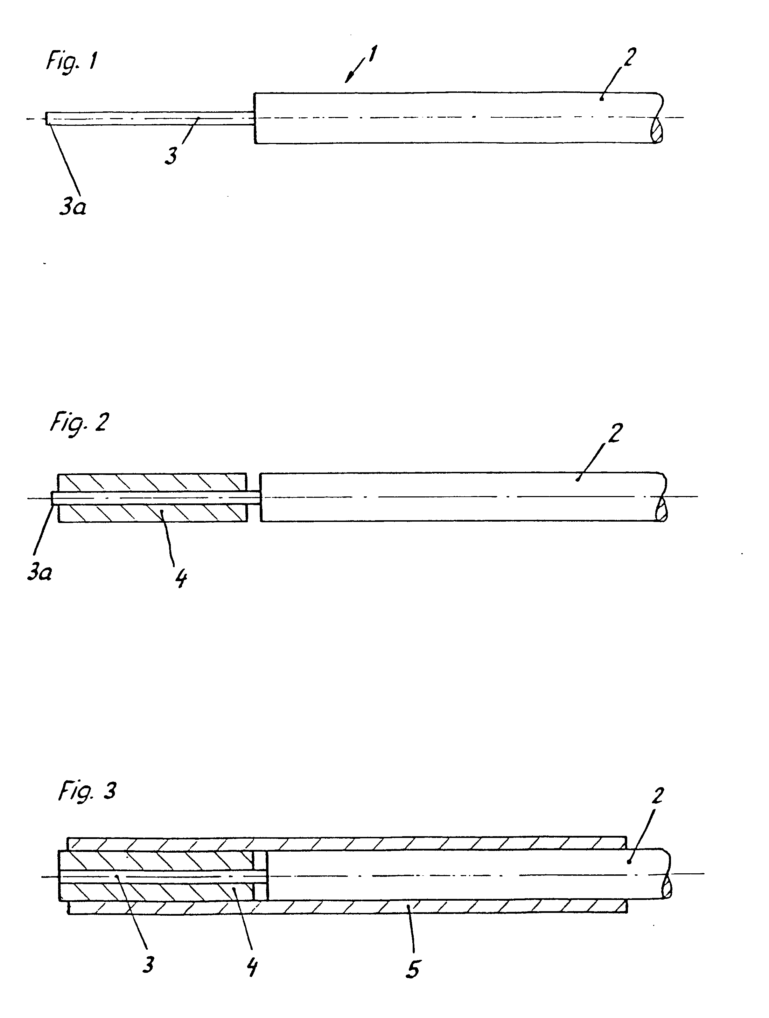

Gemäss Fig. 1 weist ein Lichtwellenleiter 1 einen Kunststoffmantel auf, der im Endabschnitt entfernt ist, sodass die das Licht leitende Glasfaser 3 freigelegt ist.

Zur Herstellung einer Koppelanordnung wird gemäss Fig. 2 auf den Endabschnitt des Lichtwellenleiters 1 ein aus gezogenem Glas hergestelltes Kapillarröhrchen 4 aufgesteckt und verklebt. Die Glasfaser 3 ragt dabei über die Stirnfläche des Kapillarröhrchens 4 hinaus.

Fig. 3 zeigt, wie über die Gesamtanordnung aus Kapillarröhrchen 4 und Lichtwellenleiter 1 ein Halteröhrchen 5 geschoben wird. Das Halteröhrchen 5 wird dabei in nicht dargestellter Weise sowohl mit dem Kapillarröhrchen 4 als auch mit dem Kunststoffmantel 2 verklebt. Dadurch wird optimale Festigkeit und sichere Axialführung der Glasfaser sichergestellt. Aus Fig. 3 ist ausserdem ersichtlich, dass das vorstehende Ende 3a (Fig. 2) der Glasfaser 3 stirnseitig abgeschliffen ist. Dieser Schleifvorgang ist bekannt und wird deshalb hier nicht näher erläutert. Das Kapillarröhrchen 4 und das Halteröhrchen 5 gewährleisten jedoch, dass eine einwandfreie, plane und im rechten Winkel zur Längsachse verlaufende Stirnfläche erreichbar ist. Durch den Umstand, dass das Halteröhrchen 5, bezogen auf die Stirnfläche des Kapillarröhrchens 4, etwas zurückgezogen angeordnet ist, wird sichergestellt, dass beim Schleifen der Glasfaser 3 keine Verunreinigungen durch Metallspäne vorkommen.

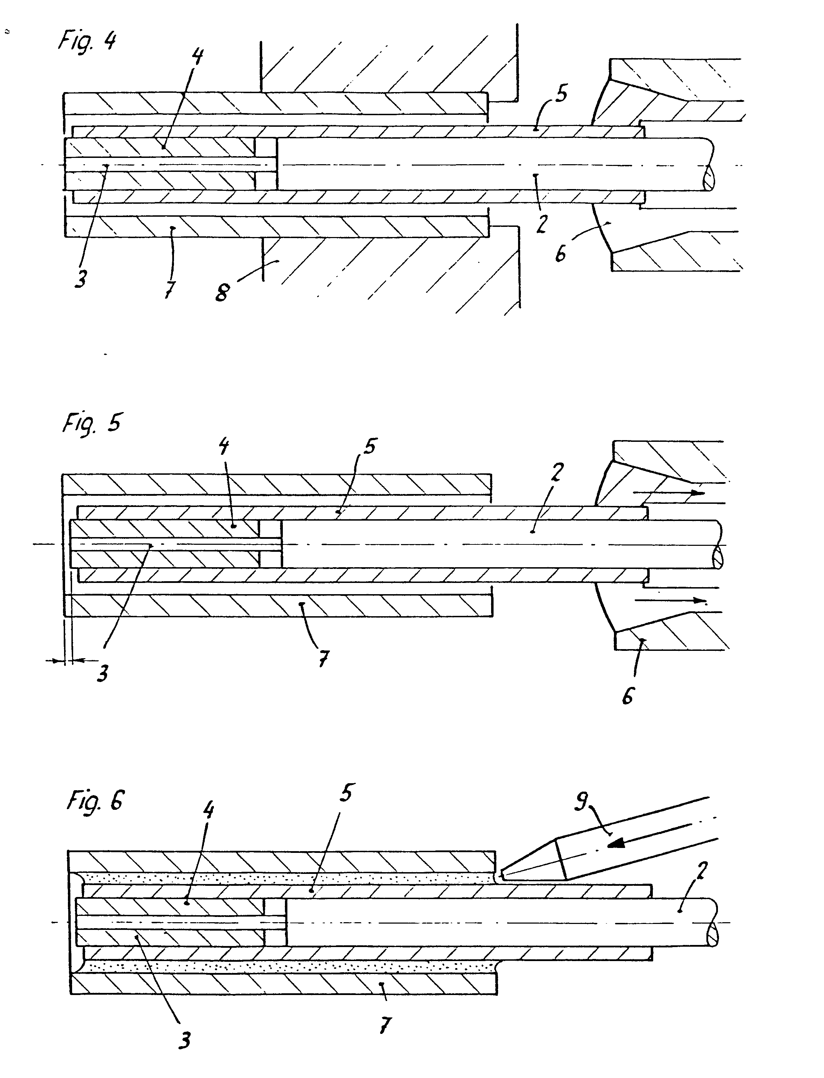

Fig. 4 zeigt, wie die Anordnung aus Lichtwellenleiter, Kapillarröhrchen und Halteröhrchen in einer Einspann- und Zentriereinrichtung 6 (schematisch dargestellt) befestigt ist. Vorteilhaft wirkt sich dabei aus, dass das Halteröhrchen 5 so lang ist, dass es über eine Zentrierhülse 7 hinausragt und durch die Zentriereinrichtung 6 greifbar ist. Die Zentrierhülse 7 ist dabei in einer nicht näher dargestellten Halteanordnung 8 befestigt, welche die Einstellung der gewünschten Relativlage der Glasfaser 3 im axialen Zentrum der Zentrierhülse 7 ermöglicht. Während des Justiervorgangs ist dabei die Stirnseite der Glasfaser 3 und des Kappilarröhrchens 4 bündig mit der Stirnseite der Zentrierhülse 7.

Fig. 5 zeigt, wie durch Zurückziehen der Zentriereinrichtung 6 nach dem Abschluss des Zentriervorgangs um einen Betrag von etwa 1- bis 3-tausendstel Millimetern die Stirnseite der Glasfaser 3 hinter die Stirnfläche der Zentrierhülse 7 zurückgezogen wird, sodass zuverlässig. vermieden wird, dass beim Zusammenbau die Stirnflächen zweier Glasfasern aufeinander reiben und sich gegebenenfalls beschädigen.

Fig. 6 zeigt, wie nach dem Abschluss des Justiervorgangs durch eine Düse 9 schnell aushärtender Klebstoff in den Ringraum zwischen Zentrierhülse 7 und Halteröhrchen 5 eingebracht wird. Durch das Einbringen, bzw. Einspritzen des Klebstoffs von hinten wird vermieden, dass die Stirnfläche der Glasfaser 3 durch Klebstoff verunreinigt werden könnte.

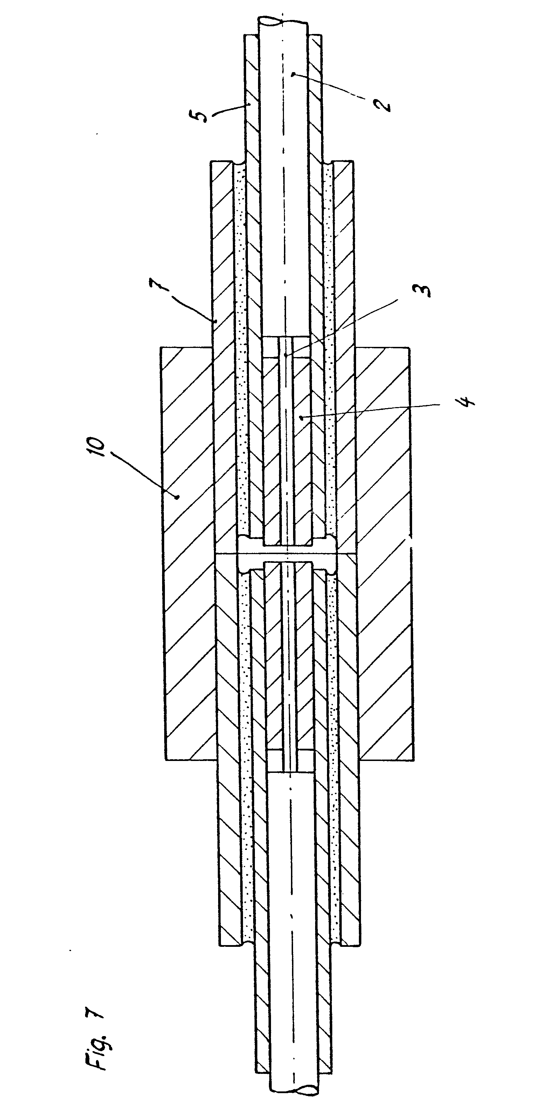

Fig. 7 zeigt zwei Koppelanordnungen im zusammengebauten Zustand, wobei die beiden Zentrierhülsen 7 durch Zentriermuffe 10 zusammengehalten werden. Sowohl die Zentriermuffe 10 als auch die Zentrierhülsen 7 sind dabei aus Hartmetall gefertigt und weisen sowohl an den miteinander in Eingriff stehenden Flächen, als auch an den anliegenden Stirnflächen eine Genauigkeit im tausendstel Millimeterbereich auf. Im Zwischenraum zwischen den Stirnflächen der beiden Glasfasern 3 befindet sich ein Kontakt-Gel, das in bekannter Weise einwandfreie Uebertragung der Lichtwellen zwischen den Glasfasern 3 sicherstellt.

Insgesamt zeichnet sich die Gesamtanordnung sowohl durch grosse Genauigkeit, einfache Montage und einfachen Gesamtaufbau aus.

Patentansprüche

1. Koppelanordnung für Lichtwellenleiter, bei der ein Lichtwellenleiter-Endabschnitt in der Bohrung eines Halteröhrchens fixiert und das Röhrchen in einer Zentrierhülse angeordnet ist, d a d u r c h  g e k e n n z e i c h n e t , dass zwischen dem Halteröhrchen und dem Lichtwellenleiter-Endabschnitt wenigstens ein Kapillarröhrchen vorgesehen ist.

2. Koppelanordnung nach Anspruch 1, d a d u r c h  g e - k e n n z e i c h n e t , dass das Kapillarröhrchen ein Glasröhrchen, insbesondere ein gezogenes Glasröhrchen ist.

3. Koppelanordnung nach Anspruch 1, d a d u r c h  g e - k e n n z e i c h n e t , dass das Kapillarröhrchen im Halteröhrchen mit einer engen Toleranzpaarung mit Schiebesitz angeordnet ist.

4. Koppelanordnung nach Anspruch 1, d a d u r c h  g e - k e n n z e i c h n e t , dass der Lichtwellenleiter-Endabschnitt mit Schiebesitz im Kapillarröhrchen angeordnet ist.

5. Koppelanordnung, insbesondere nach Anspruch 1, d a - d u r c h   g e k e n n z e i c h n e t , dass die Zentrierhülse aus einem isotropen Sintermaterial und/oder einem polykristallinen und/oder einem monokristallinen Material besteht.

6. Koppelanordnung nach Anspruch 5, d a d u r c h   g e - k e n n z e i c h n e t , dass die Zentrierhülse aus Hartmetall besteht.

7. Koppelanordnung nach einem der vorangehenden Ansprüche, d a d u r c h   g e k e n n z e i c h n e t , dass der Lichtwellenleiter-Endabschnitt im Kapillarröhrchen mittels eines aushärtenden Materials, insbesondere mittels eines Klebstoffs, befestigt ist.

8. Koppelanordnung nach einem der Ansprüche 1 bis 5 mit einem Lichtwellenleiter mit Schutzmantel, d a d u r c h   g e - k e n n z e i c h n e t , dass das Kapillarröhrchen den Lichtwellenleiter-Endabschnitt in einen vom Schutzmantel befreiten Bereich umgibt, dass das Kapillarröhrchen im Aussendurchmesser etwa dem Aussendurchmesser des Schutzmantels entspricht, und dass das Halteröhrchen länger als das Kapillarröhrchen ausgebildet ist und den Schutzmantel im Endbereich umgibt.

9. Koppelanordnung nach Anspruch 8, d a d u r c h   g e - k e n n z e i c h n e t , dass das Halteröhrchen mit dem Schutzmantel verklebt ist.

10. Koppelanordnung nach einem der Ansprüche 1 bis 5, d a - d u r c h   g e k e n n z e i c h n e t , dass das Kapillarröhrchen stirnseitig über das Metallröhrchen hinausragt.

11. Koppelanordnung nach einem der Ansprüche 1 bis 6, d a - d u r c h   g e k e n n z e i c h n e t , dass die Zentrierhülse stirnseitig über das Kapillarröhrchen hinausragt.

12. Verfahren zum Herstellen einer Koppelanordnung für Lichtwellenleiter nach Anspruch 1, d a d u r c h   g e - k e n n z e i c h n e t , dass der Lichtwellenleiter-Endabschnitt in das Kapillarröhrchen und dieses in das Halteröhrchen gesteckt wird, wobei die genannten Bauteile miteinander verbunden werden, dass der Lichtwellenleiter-Endabschnitt derart in das Kapillarröhrchen eingeschoben wird, dass er über die Stirnfläche des Kapillarvolumens hinausragt, dass das Kapilarröhrchen derart in das Halteröhrchen eingeschoben wird, dass es über die Stirnfläche hinausragt, dass der Lichtleiter-Endabschnitt nach dem Verbinden mit dem Kapillaröhrchen an seiner Stirnfläche plan und im rechten Winkel zur Leiterachse geschliffen wird, dass das Halteröhrchen mit dem Kapillarröhrchen und Lichtwellenleiter-Endabschnitt in die Zentrierhülse eingebracht und zunächst stirnseitig fluchtend angeordnet und in dieser Lage zentriert wird, und dass sodann das Halteröhrchen derart axial zurückgezogen wird, dass die Stirnfläche des Lichtwellenleiter-Endabschnitts geringfügig hinter die Stirnfläche der Zentrierhülse zurückgesetzt ist, und dass das Halteröhrchen in dieser Lage mit der Zentrierhülse verbunden wird.

13. Verfahren nach Anspruch 12, d a d u r c h   g e k e n n - z e i c h n e t , dass zum Verbinden von Halteröhrchen und Zentrierhülse von der der Stirnfläche abgewandten Seite her Klebstoff in den Ringraum zwischen Zentrierhülse und Halteröhrchen eingebracht wird.

Fig. 1

Fig. 2

Fig. 3

Fig. 4

Fig. 5

Fig. 6

0025013

Fig. 7

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| X | REVIEW OF THE ELECTRICAL COMMUNI-CATION, Band 26, Nr. 5-6, Mai-Juni 1978 N. SUZUKI et al. "New Connectors for an Experimental Optical Fiber Transmission System" Seiten 693 bis 699 * Fig. 6 und 8 * -- | 1-4 | G 02 B 7/26 |
| | US - A - 3 902 784 (M.L. DAKSS et al.) * Spalte 3, Zeilen 2 bis 23 * -- | 2,3 | **RECHERCHIERTE SACHGEBIETE (Int. Cl.³)** G 02 B 7/26 |
| | DE - A1 - 2 654 537 (LICENTIA PATENT-VERWALTUNGS-GMBH) * Seiten 4 bis 6 * -- | 2,4,12 | |
| | DE - A1 - 2 711 670 (FELTEN & GUIL-LEAUME CARLSWERK AG) * Seite 7, unten * -- | 5,6 | |
| | DE - A1 - 2 834 766 (MINNESOTA MINING AND MANUFACTURING CO.) * Fig. 2 * -- | 10,11 | **KATEGORIE DER GENANNTEN DOKUMENTE** X: von besonderer Bedeutung A: technologischer Hintergrund O: nichtschriftliche Offenbarung P: Zwischenliteratur |
| | DE - A1 - 2 619 625 (DEUTSCHE ITT INDUSTRIES GMBH) * Seite 9, unten * -- ./.. | 13 | T: der Erfindung zugrunde liegende Theorien oder Grundsätze E: kollidierende Anmeldung D: in der Anmeldung angeführtes Dokument L: aus andern Gründen angeführtes Dokument |

|  | &: Mitglied der gleichen Patent-familie, übereinstimmendes Dokument |
|---|---|
| X Der vorliegende Recherchenbericht wurde für alle Patentansprüche erstellt. | |

| Recherchenort | Abschlußdatum der Recherche | Prüfer | |
|---|---|---|---|
| Berlin | 20-11-1980 | FUCHS | |

EPA form 1503.1  06.78

Europäisches
Patentamt

**EUROPÄISCHER-RECHERCHENBERICHT**

| | **EINSCHLÄGIGE DOKUMENTE** | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| A | <u>DE - A1 - 2 559 448</u> (SIEMENS AG)<br>* Ansprüche *<br><br>-- | | |
| A | <u>DE - A1 - 2 758 964</u> (FELTEN & GUIL-<br>LEAUME CARLSWERK AG)<br>* Seite 8 *<br><br>---- | | |
| | | | **RECHERCHIERTE SACHGEBIETE (Int. Cl.)** |

EPA Form 1503.2  06.78